# EUROPEAN PATENT APPLICATION

(11) **EP 4 310 327 A1**
(43) Date of publication of application: **24.01.2024**
(21) Application number: 22185401.1
(22) Date of filing: 18.07.2022
(51) Int. Cl.: F03D 13/25, F03D 9/19, C25B 1/04

(54) **HOUSING UNIT FOR WIND TURBINES**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The invention relates to a wind turbine comprising a generator (2), a base, a nacelle (42), a tower (41) having a first end mounted to the base (5) and a second end supporting the nacelle (42), a platform (45) arranged above water at the first end of the tower (41) or at the base, and at least one housing unit (20) arranged on the platform (45) and configured to house components of said wind turbine. The housing unit (20) is configured to open for exposing the components housed in the housing unit (20) and to close for protecting the components housed in the housing unit (20).

## Description

The present invention relates to a wind turbine comprising a housing unit.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines. The transport of hydrogen, in particular in a pipeline system, is less expensive than transporting electricity directly to shore.

Hence, there is a need to provide a safe transportation system for hydrogen produced by wind turbines to a desired destination.

The use of electrolytic units in combination with wind turbines is known from the prior art, for example in the document US 5,592,028 A, where a plurality of electrolysis cells is connected to a wind farm and produce hydrogen by means of the electricity produced by the generators of the wind turbines. Similarly, the document WO 2020/095012 A1 describes an offshore wind turbine system for the largescale production of hydrogen, which includes a floating tower structure with a desalination unit and an electrolysis unit.

The electrolytic unit is usually installed on an electrolytic unit platform open to the atmosphere. Due to the harsh environmental conditions of wind turbine locations, the components of the electrolytic unit are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as an electrolytic unit installed on an electrolytic unit platform of the wind turbine, are usually housed in a housing unit.

Housing electrical components such as the electrolytic unit in a housing unit has some drawbacks. Usually, the housing unit has a limited space, so service and maintenance tasks of the equipment housed is difficult. In addition, due to the limited space it can be dangerous for workers to be inside the housing unit doing these tasks, in particular because of the high voltage cables and explosive gases connected to the electrolytic unit.

In addition, by opening the housing unit for inspection and maintenance of the parts housed inside, these parts are exposed to the atmosphere. For the case of offshore wind turbines, the electrolytic units arranged on electrolytic unit platforms are additionally exposed to the high levels of salt in the atmosphere.

It is an object of the invention to provide a wind turbine comprising a housing unit which overcomes the problems known in the prior art.

This is achieved by a wind turbine according to claim 1.

According to the invention, a wind turbine comprises a generator, a base, a nacelle, a tower having a first end mounted to the base and a second end supporting the nacelle, a platform arranged above water at the first end of the tower or at the base, and at least one housing unit arranged on the platform and configured to house components of said wind turbine.

The platform can thus be arranged at the first end of the tower between the tower and the base or at the base directly.

The base can comprise a foundation such as a monopile and a transition piece. The platform can thus be arranged at the transition piece or between the transition piece and the first end of the tower.

According to the invention, the housing unit is configured to open for exposing the components housed in the housing unit and to close for protecting the components housed within the housing unit.

This has the advantage that the components housed in the housing unit are more easily accessible to workers. Usually, components housed in housing units are compactly arranged, which makes maintenance and repairment tasks more difficult. The solution proposed by the invention makes it possible to achieve these tasks in less time due to the easier access to the components of the housing unit.

By having more space for the repairment and maintenance tasks, the components can be repaired on-site and do not need to be hoisted out of the platform by a crane, as it is usually done in the prior art.

The safety to the workers is increased through the proposed invention as well, as the workers are not confined to the limited space of the housing unit but can work from outside the housing unit.

According to a preferred embodiment of the invention, the wind turbine comprises a plurality of housing units arranged on the platform, wherein each housing unit is configured to open for exposing the components housed in the housing unit and to close for protecting the components housed within the housing unit.

By having a plurality of housing units, several components arranged on the platform can be housed within, thereby protecting the components from the harsh environmental conditions. As the housing units are configured to open, the repairment and maintenance tasks of these components is improved as well, as stated before.

According to another preferred embodiment of the invention, electrical equipment is housed in a housing unit. Electrical equipment comprises metallic parts prone to corrosion due to the harsh environmental conditions of the sites on which wind turbines are erected, in particular offshore sites due to the salt in the atmosphere. Electrical equipment is usually protected in housing units to avoid corrosion. To improve the maintenance tasks, the housing units are configured to open for exposing the electrical equipment housed in the housing unit and to close for protecting the electrical equipment housed within the housing unit. This results in the benefits stated above.

According to another preferred embodiment of the invention, the wind turbine further comprises an electrolytic unit electrically coupled to the generator for producing hydrogen.

Hydrogen is produced from an input fluid, in particular water, and the wind turbine comprises a system outlet for transporting the produced hydrogen out of the wind turbine.

Hence, the generator generates electric power and supplies the electrolytic unit with at least a part of the power generated, as both components are electrically coupled.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet coupled to an output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

According to another preferred embodiment of the invention, the electrolytic unit is housed in a housing unit. Thus, the electrolytic unit is at least partly arranged on the platform. With the dedicated platform, the electrolytic unit can be more easily mounted than for example by installing the electrolytic unit on the nacelle and at least a part of the electrolytic unit can be kept above the water level.

The components of the electrolytic unit are protected from the environmental conditions through the housing unit. In addition, these components are easily accessible by opening the housing unit.

According to another preferred embodiment of the invention, the housing unit is a container. Due to the harsh environmental conditions of wind turbine locations, the components are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as the electrolytic unit, are usually housed in containers.

According to another preferred embodiment of the invention, the wind turbine further comprises sliding means for opening at least a part of the housing unit. Sliding means allow the housing unit to move with respect to the components housed inside, thereby exposing the components. Sliding means can be rails mounted on the ground and wheels arranged at the part of the housing unit in contact with the ground to allow the sliding of the housing unit with respect to the ground, on which the components inside the housing unit are arranged.

Hence, at least a part of the housing unit is configured to slide over the components housed in the housing unit, resulting in an opening through which the access to the components is improved. In addition, this allows to easily hoist damaged components outside the platform, as there is more space for the hoisting and no housing blocks it.

According to another preferred embodiment of the invention, the wind turbine further comprises a telescopic system for opening and closing the housing unit.

The telescopic system can be arranged at the base of the housing unit or between the platform on which the housing unit is arranged and the housing unit.

The telescopic system comprises a telescopic arm coupled to the housing unit and being slidable from a stowed position to an extended position, thereby opening the housing unit.

The components housed in the housing unit are arranged at the base of the housing unit in contact with the platform and do not shift when the telescopic system is activated.

According to another embodiment of the invention, a side of the housing unit is configured to be removable for having an opening at the housing unit. This allows direct access to the components of the housing unit and also allows the sliding means and the telescopic system to shift the housing unit with respect to the components housed within the housing unit.

According to another embodiment of the invention, the wind turbine further comprises rotating means for rotating at least a part of the housing unit. For example, the housing unit can have one edge pivotally connected to the platform. This allows to rotate the housing unit from the closed position, in which the components are protected from the environment, to the open position, thereby allowing access to the components from the platform. The rotating system has the advantage that it reduces the time for maintenance and repairment tasks.

According to another preferred embodiment of the invention, the rotating system comprises a hinge or a pin joint for the rotational movement. The hinge or pin joint can be coupled to the housing unit and to the platform by means of a bushing. For example, the hinge or pin joint can be coupled to an edge of the housing unit and to an edge of the platform to pivotally couple the housing unit to the platform.

According to another preferred embodiment of the invention, the rotating system comprises a lock pin and a lock socket for securing the housing unit in at least one position. The lock pin is a pin with a smaller diameter than the lock socket and which can be introduced in the lock socket to secure the lock pin to the lock socket, thereby securing the components attached to this locking system together. This allows to partly open the housing unit and to be able to securely do the maintenance tasks without the risk of the housing unit to close.

Preferably, the lock pin is coupled to the platform and the lock socket is coupled to the housing unit to lock the housing unit.

Preferably, the lock pin is coupled to the housing unit and the lock socket is coupled to the platform to lock the housing unit.

Care should be taken not to impact the blades when rotating the housing unit.

According to another preferred embodiment of the invention, the rotating means comprise an actuator, preferably a hydraulic arm. A hydraulic arm allows the rotation of the housing unit.

According to another preferred embodiment of the invention, the wind turbine further comprises a rod for locking the housing unit at the open position. The rod prevents the housing unit from closing again, thereby harming workers doing maintenance or repairments tasks at the components of the housing unit while the housing unit is in open position. According to another preferred embodiment of the invention, the wind turbine further comprises a seal for sealing the housing unit. The seal prevents dust or salt from entering the housing unit when the housing unit is in the closed position by forming a sealed connection between the movable parts of the housing unit and the stationary parts of the housing unit.

According to another preferred embodiment of the invention, the housing unit is filled with air or with an inert gas. This is particularly advantageous, as this measure prevents salt from getting inside the housing unit, thereby corroding the components housed within.

According to another preferred embodiment of the invention, the wind turbine further comprises a cover for protecting the components from the environment when the housing unit is in open position. The cover can be extended and tightened when the housing unit is in open position to prevent that rain, dirt and salt pass through the opening of the housing unit, thereby damaging the components inside the housing unit.

The cover can be a tent having poles to increase the space of operation of the workers.

According to another preferred embodiment of the invention, the wind turbine further comprises a control system. The control system can stop the wind turbine while the housing unit is in an open position.

A sensor can monitor if the housing unit is in open position and stop the turbine from rotating and/or turn the blades away from the working area where the housing unit is arranged. The control system can also lock the rotor when the housing unit is in open position. The sensor can be a camera detecting the position of the housing unit.

In order to facilitate the understanding of the characteristics of the invention and being an integral part of this specification, some drawing sheets are attached on which fig- ures, with an illustrative but not limiting character, the following is represented:
Figure 1 shows a schematic view of a wind turbine.
Figures 2 to 4 show the process of opening the housing unit to expose the electrolytic unit according to a first embodiment of the invention.
Figure 5 shows the opening of the housing unit to expose the electrolytic unit according to a second embodiment of the invention.
Figure 6 shows the opening of the housing unit to expose the electrolytic unit according to a third embodiment of the invention.
Figure 7 shows the container opened halfway.
Figure 8 shows the container with support wires.
Figure 9 shows the container with a tent.
Figures 10 to 12 show the opening of a container according to another embodiment of the invention.
Figures 13 and 14 show the opening of the container by means of a telescopic system.
Figures 15 and 16 show the embodiment of Figures 13 and 14 further comprising a cover.
Figure 17 shows a cover according to another embodiment of the invention.
Figures 18 to 20 show a housing unit comprising a plurality of housing parts.
Figure 21 shows a cover covering the open surface of the housing unit as shown in Figures 18 to 20.
Figure 22 shows the housing unit as shown in Figures 18 to 20 further comprising a seal for sealing the housing unit.

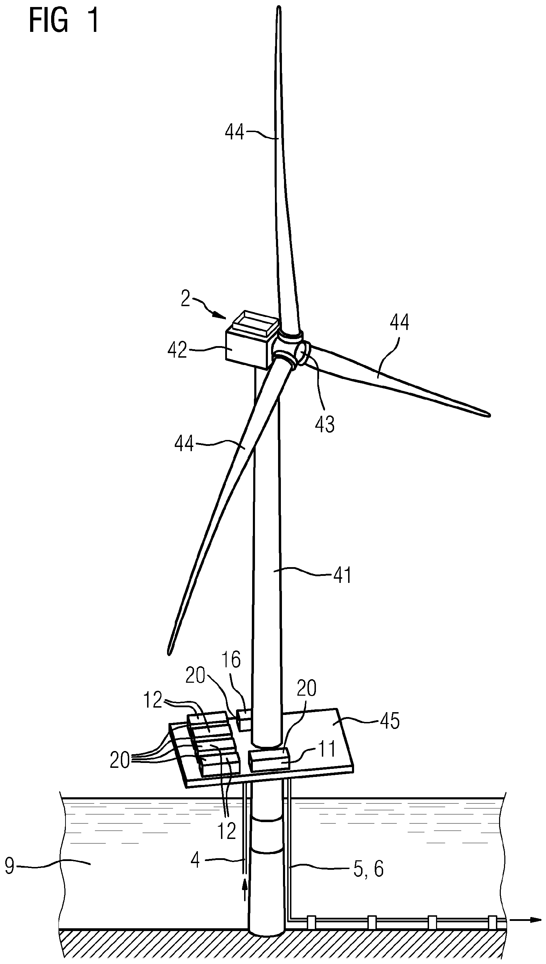

Figure 1 shows a schematic view of a wind turbine, wherein the power produced by the generator 2 is completely transferred to the electrolytic unit 12.

The wind turbine comprises a tower 41 and a nacelle 42 mounted on the tower 41, to which a hub 43 is attached. A rotor is mounted at the hub 43 and coupled to the generator 2. A plurality of blades 44 extends from the rotor.

The generator 2 is coupled to the electrolytic unit 12 by means of an electric connection 7.

The electrolytic unit 12 comprises a system inlet 4 and a system outlet 5. The electrolytic unit 12 is electrically powered by the generator 2 to produce hydrogen 6. To produce the hydrogen 6, water as the input fluid 9 enters through the system inlet 4 of the electrolytic unit 12 and is then transformed to hydrogen 6 in the electrolytic unit 12 by means of electric power coming from the generator 2. The hydrogen 6 exits the electrolytic unit 12 by the system outlet 5.

The electrolytic unit 12 comprises a desalination unit 11 and an electrolytic unit 12, as well as a fluid connection between the desalination unit 11 and the electrolytic unit 12. The electrolytic unit 12 and the desalination unit 11 are both powered by the generator 2, which is connected to both devices by means of an electric connection 7.

A plurality of electrolytic units 12 as part of the electrolytic device is arranged on the platform 45 of the wind turbine. The electrolytic device further comprises a desalination unit 11 and electrical equipment 16, such as control units or power converters, arranged in a housing unit 20, wherein the housing unit is a container.

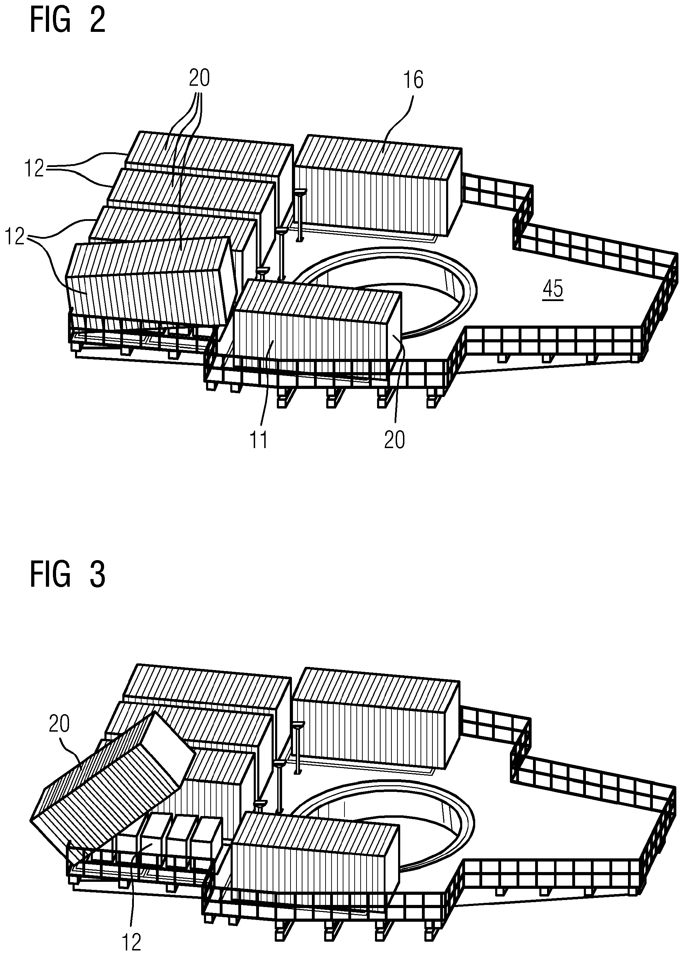

Figures 2 to 4 show the process of opening the housing unit 20 to expose the electrolytic unit 12. Each electrolytic unit 12 is housed in a housing unit 20. Two further housing units 20 house a desalination unit 11 and electrical equipment 16. Each housing unit 20 is a container. Each housing unit 20 is arranged on the platform 45 above water.

The wind turbine further comprises rotating means for rotating at least a part of the housing unit 20. With the rotating means, the upper part of the container can be pivoted from the ground, thereby exposing the electrolytic units 12 housed within the container.

The opening of the container can be done remotely to increase the safety of the workers, for example from a vessel or inside the tower 41.

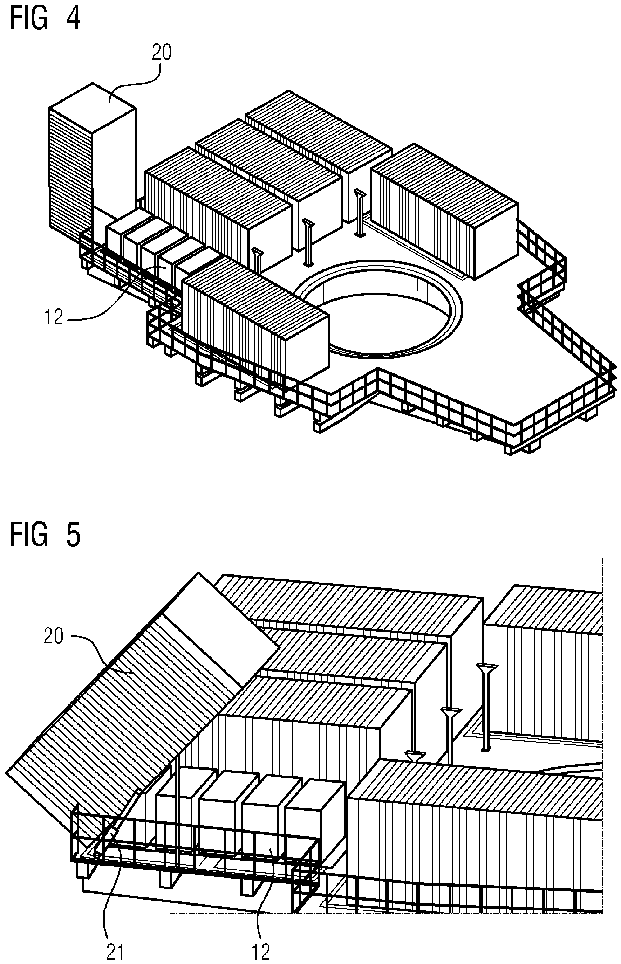

In the fully open position as shown in Figure 4, there is a possibility to exchange the complete skid, i.e., all equipment inside the container. This can be done by means of a crane.

Figure 5 shows the opening of the housing unit 20 to expose the electrolytic unit 12 according to a second embodiment of the invention.

The wind turbine comprises an actuator 21 coupled to the platform 45 and to the rotating part of the container for the rotational movement of the container. Different actuators 21 are known in the art, such as electrical, hydraulic, or even electro-magnetic. In the embodiment shown in this Figure, the actuator 21 is a hydraulic arm.

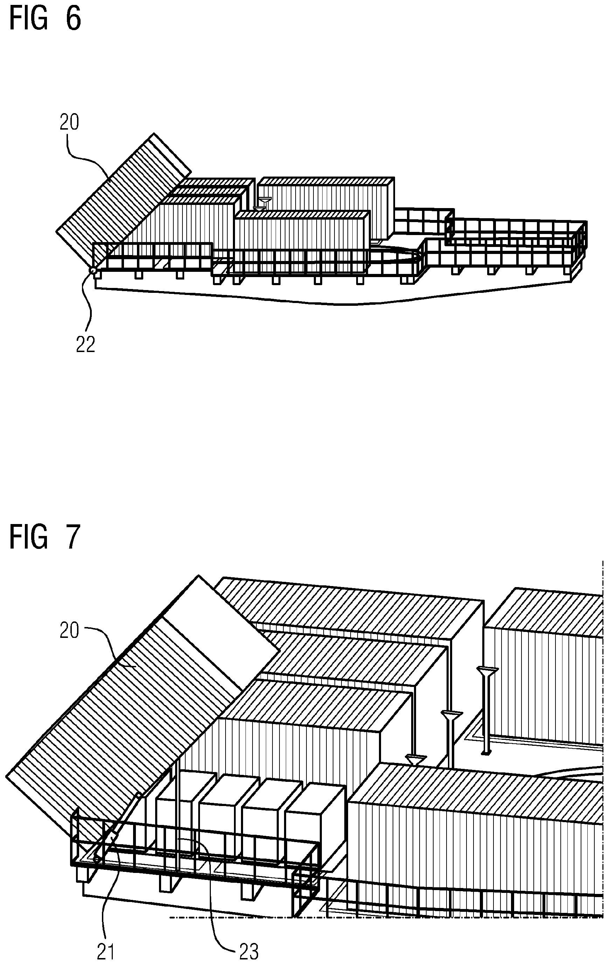

Figure 6 shows the opening of the housing unit 20 to expose the electrolytic unit 12 according to a third embodiment of the invention. The rotating system comprises a hinge 22 or a pin joint for the rotational movement. The hinge 22 or pin joint is coupled to the rotating part of the housing unit 20 and to the platform 45 for example by means of a bushing. In this Figure, the hinge 22 or pin joint is coupled to an edge of the housing unit 20 and to an edge of the platform 45 to pivotally couple the housing unit 20 to the platform 45.

Figure 7 shows the container opened halfway, for example for small repairment tasks at the electrolytic units 12. To ensure the safety of the workers, a rod 23 is arranged for blocking the movement of the container.

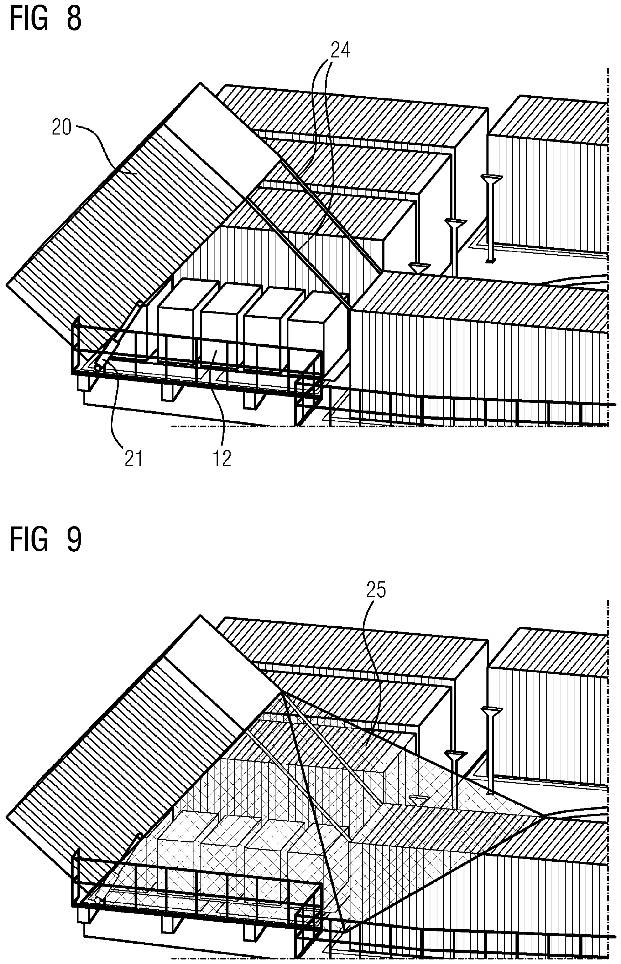

Figure 8 shows the container comprising support wires 24. The support wires 24 are used to tense a cover 25 (not shown). The cover 25 protects the electrolytic units 12 from the environment when the housing unit 20 is in open position. The cover 25 can thus be extended and tightened by means of the support wires 24 when the housing unit 20 is in open position to prevent that rain, dirt and salt pass through the opening of the housing unit 20, thereby damaging the components inside the housing unit 20.

As shown in Figure 9, the cover 25 can be a tent having poles to increase the space of operation of the workers. The tent can be attached prior to the opening of the container and will automatically stretch out when attached to the platform 45 and the container.

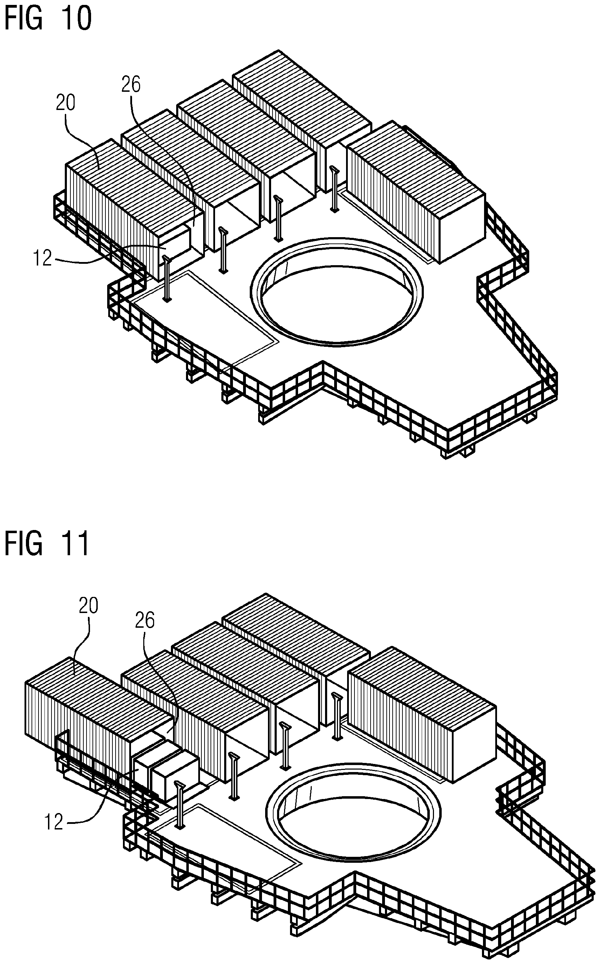

Figures 10 to 12 show the opening of a container according to another embodiment of the invention. The container comprises a plurality of openings 26. The openings 26 allow direct access to the components of the housing unit 20 and also allow the sliding means and the telescopic system to shift the housing unit 20 with respect to the components housed within the housing unit 20.

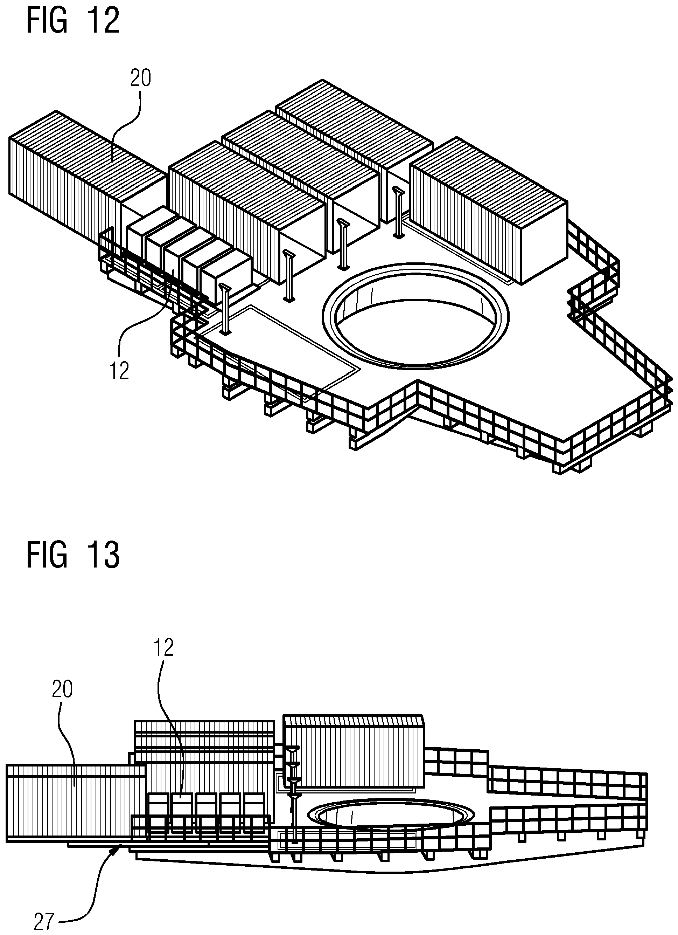

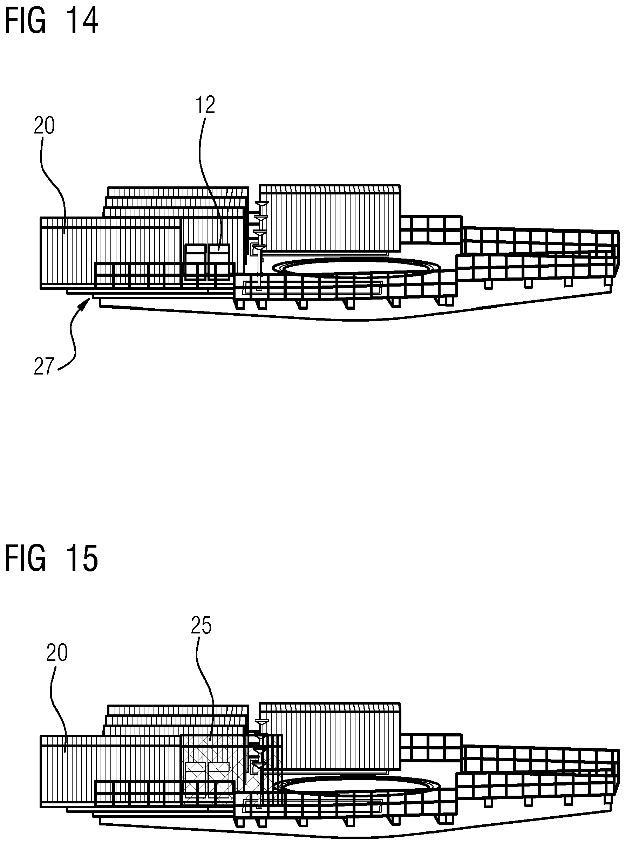

Figures 13 and 14 show the opening of the container by means of a telescopic system 27.

The telescopic system 27 is arranged at the base of the housing unit 20 between the platform 45 on which the housing unit 20 is arranged and the housing unit 20 and is both attached to the platform 45 and to the housing unit 20.

The telescopic system 27 comprises a plurality of telescopic arms coupled to the housing unit 20 and being slidable from a stowed position to an extended position, thereby opening the housing unit 20.

The electrolytic unit 12 housed in the housing unit 20 is arranged at the base of the housing unit 20 in contact with the platform 45 and does not shift when the telescopic system 27 is activated.

In Figure 15, the embodiment previously shown in Figures 13 and 14 further comprises a cover 25 to protect the electrolytic unit 12 from salt and dust of the environment.

The cover 25 is a foldable tent, which expands and unfolds during the opening of the container and folds back again during the closing of the container.

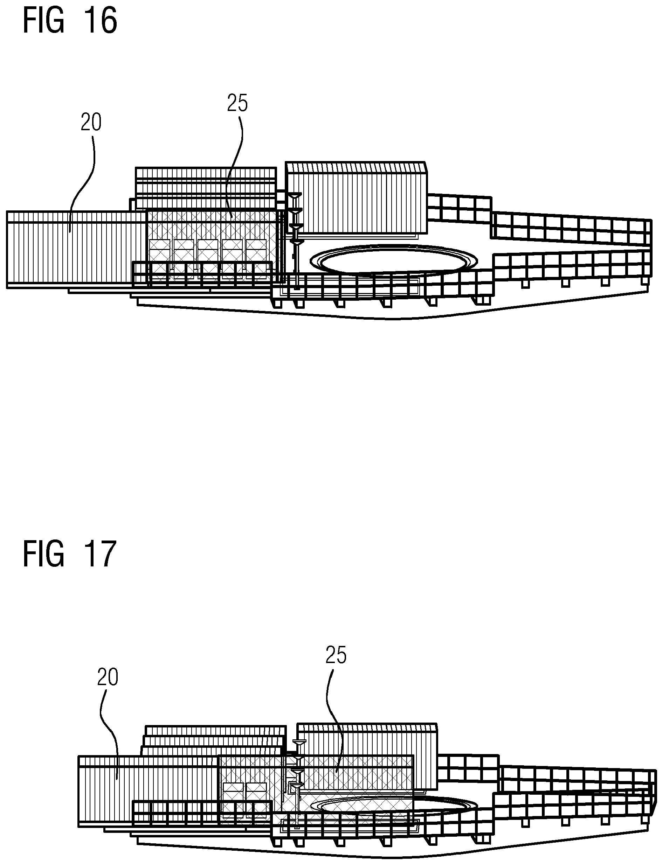

Figure 17 shows a cover 25 according to another embodiment of the invention. This cover 25 is mounted prior to the sliding of the container and automatically shifts over the components housed inside the container when the container slides.

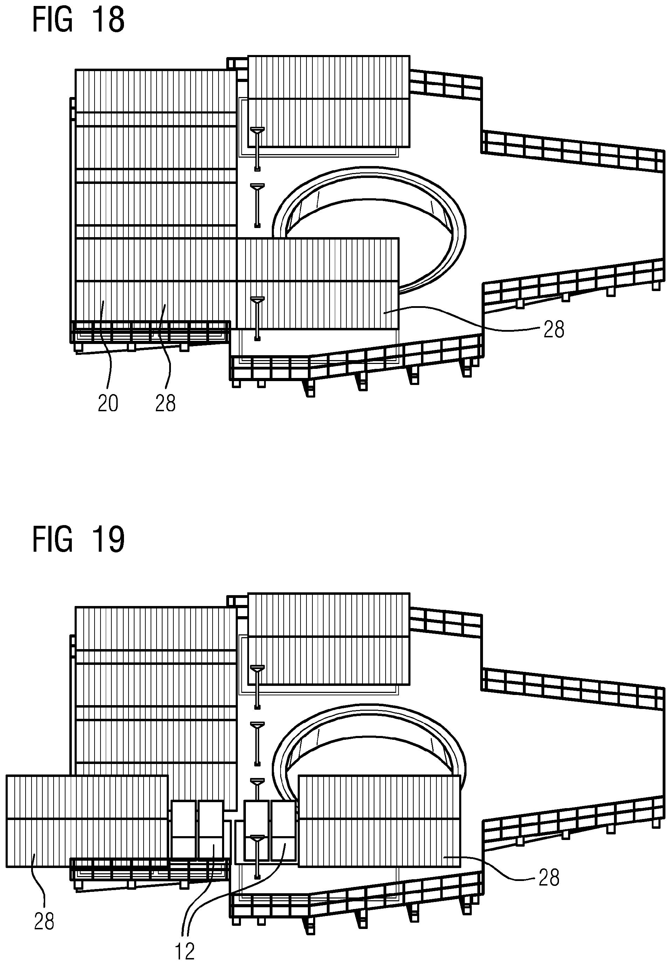

Figures 18 to 20 show a housing unit 20 comprising a plurality of housing parts 28. In these Figures, the housing unit 20 is divided into two housing parts 28, which shift in opposite directions to uncover the electrolytic units 12 housed within the housing unit 20.

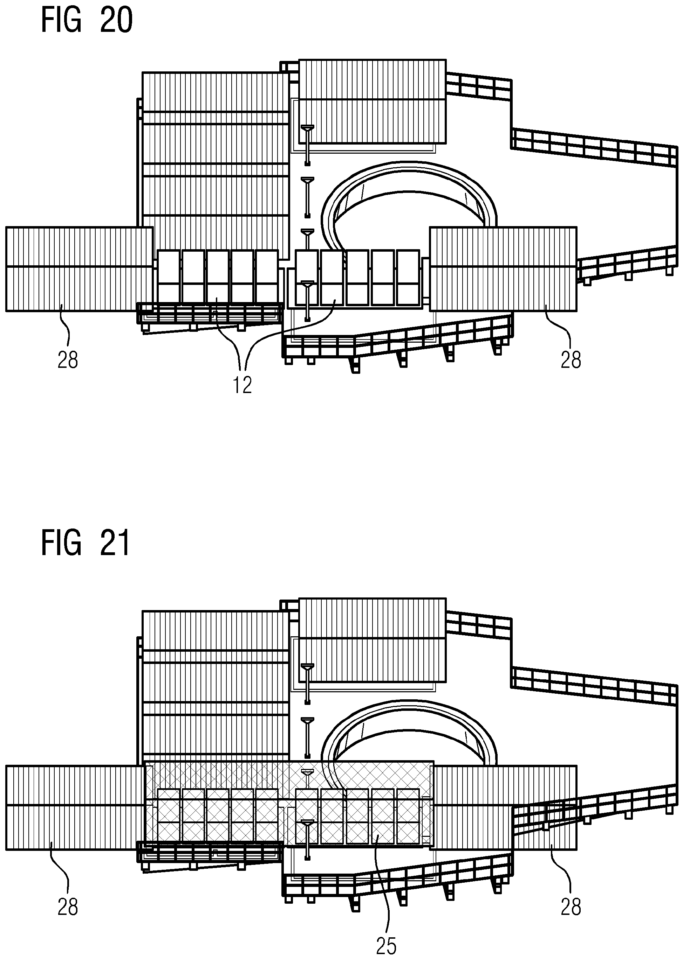

Figure 21 shows a cover 25 covering the open surface of the housing unit 20 as shown in Figures 18 to 20.

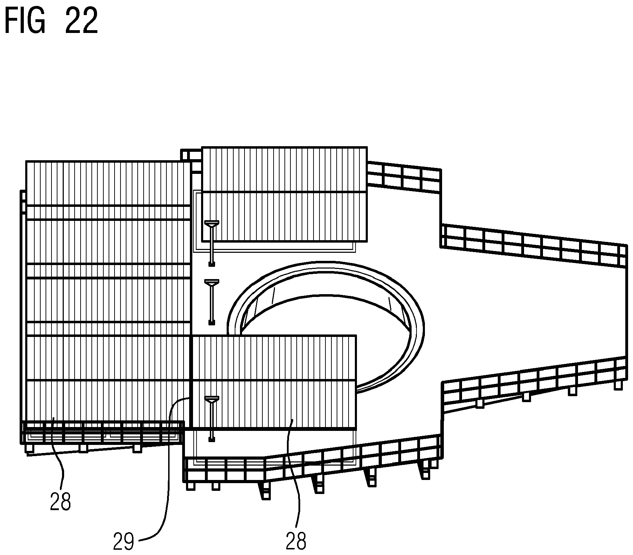

Figure 22 shows the housing unit 20 as shown in Figures 18 to 20 further comprising a seal 29 for sealing the housing unit 20. The seal 29 prevents dust or salt from entering the housing unit 20 when the housing unit 20 is in the closed position by forming a sealed connection between the movable parts of the housing unit 20 and the stationary parts of the housing unit 20.

The seal 29 can be a lib seal. It can be inflatable if needed. There can be a plurality of libs to ensure the tightness of the system.

### Reference List

- 2: Generator
- 4: System inlet
- 5: System outlet
- 6: Hydrogen
- 7: Electric connection
- 9: Input fluid

- 11: Desalination unit
- 12: Electrolytic unit
- 16: Electrical equipment

- 20: Housing unit
- 21: Actuator
- 22: Hinge
- 23: Rod
- 24: Support wire
- 25: Cover
- 26: Opening
- 27: Telescopic system
- 28: Housing part
- 29: Seal

- 41: Tower
- 42: Nacelle
- 43: Hub
- 44: Blades
- 45: Platform

## Claims

1. A wind turbine comprising
a generator (2),
a base,
a nacelle (42),
a tower (41) having a first end mounted to the base (5) and a second end supporting the nacelle (42),
a platform (45) arranged above water at the first end of the tower (41) or at the base, and
at least one housing unit (20) arranged on the platform (45) and configured to house at least one component of said wind turbine,
**characterized in that** the housing unit (20) is configured to open for exposing the component housed in the housing unit (20) and to close for protecting the components housed in the housing unit (20).

2. The wind turbine according to claim 1, wherein the wind turbine comprises a plurality of housing units (20) arranged on the platform (45), wherein each housing unit (20) is configured to open for exposing the component housed in the respective housing unit (20) and to close for protecting the component housed in the respective housing unit (20).

3. The wind turbine according to claim 1 or 2, wherein electrical equipment (16) is housed in the housing unit (20).

4. The wind turbine according to any of the preceding claims, wherein said wind turbine further comprises an electrolytic unit (12) electrically coupled to the generator (2) for producing hydrogen (6).

5. The wind turbine according to claim 4, wherein the electrolytic unit (12) is housed in the housing unit (20).

6. The wind turbine according to any of the preceding claims, wherein the housing unit (20) is a container.

7. The wind turbine according to any of the preceding claims, wherein the wind turbine further comprises sliding means for opening and closing the housing unit (20).

8. The wind turbine according to any of the preceding claims, wherein the wind turbine further comprises a telescopic system (27) for opening and closing the housing unit (20).

9. The wind turbine according to any of the preceding claims, wherein a side of the housing unit (20) is configured to be removable for having an opening (26) at the housing unit (20).

10. The wind turbine according to any of the preceding claims, wherein the wind turbine further comprises rotating means for rotating at least a part of the housing unit (20).

11. The wind turbine according to claim 10, wherein the rotating means comprise an actuator (21), preferably a hydraulic arm.

12. The wind turbine according to any of the preceding claims, wherein the wind turbine further comprises a rod (23) for locking the housing unit (20) at an open position.

13. The wind turbine according to any of the preceding claims, wherein the wind turbine further comprises a seal (29) for sealing the housing unit (20).

14. The wind turbine according to any of the preceding claims, wherein the wind turbine further comprises a cover (25) for protecting the components from the environment when the housing unit (20) is in an open position.

15. The wind turbine according to any of the preceding claims, wherein the wind turbine further comprises a control system.
